# EUROPÄISCHE PATENTSCHRIFT

(11) **EP 0 578 014 B1**
(45) Veröffentlichungstag und Bekanntmachung des Hinweises auf die Patenterteilung: **25.09.1996**
(21) Anmeldenummer: 93109556.6
(22) Anmeldetag: 15.06.1993
(51) Int. Cl.: B27D 3/04, B30B 5/06, B65G 15/00

(54) **Vorrichtung zum Verpressen von flächigen Werkstücken**
Device for compressing flat workpieces
Dispositif de pressage des pièces plates

(30) Priorität: 15.06.1992 DE 9208020 U
(43) Veröffentlichungstag der Anmeldung: 12.01.1994
(73) Patentinhaber: WM WILD MASCHINEN GmbH, D-33397 Rietberg (DE)
(72) Erfinder: Melies, Wolfgang, c/o Wild Maschinen GmbH, D-33397 Rietberg 3 (DE)
(74) Vertreter: Weber, Joachim, Dr.

(56) Entgegenhaltungen:
- DE-A- 3 806 700
- DE-A- 3 912 314
- DE-A- 4 015 706
- FR-A- 490 179
- DATABASE WPI Week 9210, Derwent Publications Ltd., London, GB; AN 92-075684 & JP-A-4 018 906 (FUJI ELECTRIC)
- PATENT ABSTRACTS OF JAPAN vol. 11, no. 123 (M-581)17. April 1987 & JP-A-61 263 507 (NIPPON MEKTRON)

## Beschreibung

Die Erfindung bezieht sich auf eine Vorrichtung zum Verpressen von flächigen Werkstücken, insbesondere aus Holz, wie etwa Furnieren. Eine derartige Vorrichtung ist beispielsweise aus der DE-OS 39 12 314 vorbekannt und umfaßt eine obere und eine untere Pressenplatte, welche jeweils beheizbar und gegeneinander bewegbar sind. Weiterhin ist jeweils ein oberes und ein unteres Transport- und Druckband vorgesehen. Diese beiden Bänder laufen durch einen zwischen den Pressenplatten gebildeten Durchlaufkanal und sind als umlaufende Bänder ausgestaltet, um die Werkstücke transportieren zu können.

Bei den bekannten Vorrichtungen kann es sich als nachteilig erweisen, daß sich die Transport- und Druckbänder während des Betriebes elektrostatisch aufladen. Weiterhin kann es vorkommen, daß sich in dem Innenraum des umlaufenden Bandes Schmutzpartikel ansammeln, welche während des Pressvorganges zwischen das Band und die Oberfläche der Pressenplatte gelangen und die Oberflächenqualität der Werkstücke beeinträchtigen.

Die DE-A-38 06 700 beschreibt eine Vorrichtung für das kontinuierliche Pressen von bahnförmigem Pressengut. Es sind eine obere und eine untere Pressenplatte vorgesehen, zwischen denen ein Durchlaufkanal gebildet wird. Der Durchlaufkanal wird begrenzet durch als Stahlbandschlaufe geführte Stahlbänder, welche gegen das Werkstück bzw. die zugeordnete Pressenplatte anliegen. Im Zwischenraum zwischen dem oberen und dem unteren Trum des jeweiligen Stahlbandes ist jeweils ein Stahlband-Reinigungsschaber vorgesehen, der eine Mehrzahl von gereihten Schabermesserabschnitten aufweist. Diese Messerabschnitte dienen dazu, die Stahlbänder abzuschaben und damit zu reinigen. Der Nachteil dieser Vorrichtung besteht darin, daß sie nicht für aus Kunststoff bestehende Transport- und Druckbänder einsetzbar ist, da diese sofort zerstört würden. Weiterhin ist diese Vorrichtung nicht für das Ableiten elektrostatischer Ladungen vorgesehen, sondern kratzt Verunreinigungen messerartig ab.

Der Erfindung liegt die Aufgabe zugrunde, eine Vorrichtung der eingangs genannten Art zu schaffen, welches bei einfachem Aufbau und einfacher, betriebssicherer Wirksamkeit eine elektrostatische Aufladung des Transport- und Druckbandes vermeidet.

Erfindungsgemäß wird die Aufgabe durch die Merkmale des Hauptanspruchs gelöst.

Die Unteransprüche zeigen weitere vorteilhafte Ausgestaltungen der Erfindung.

Die erfindungsgemäße Vorrichtung zeichnet sich durch eine Reihe erheblicher Vorteile aus. Mittels der Schleifeinrichtung ist es möglich, elektrostatische Aufladungen abzuleiten, ohne daß hierdurch der Durchlaufbetrieb durch die Presse gestört werden würde. Die Schleifeinrichtung ist, da sie innerhalb der Bahn des Transport- und Druckbandes angeordnet ist, vor Beschädigungen geschützt. Es ist somit ein zuverlässiger Betrieb gewährleistet, unabhängig von der Anzahl, Form und Ausgestaltung der zu verpressenden Werkstücke.

Die metallischen Bürsten stellen zum einen eine sichere Ableitung elektrostatischer Aufladung dar, zum anderen ist es möglich, mittels der Bürsten Schmutzpartikel von dem Transport- und Druckband zu entfernen.

Die Schleifeinrichtung erstreckt sich bevorzugterweise über die gesamte Breite des Transport- und Druckbandes.

Um eine einfache Anordnung und Montage der Schleifeinrichtung zu gewährleisten, kann es günstig sein, wenn diese einen metallischen Träger umfaßt, an welchem die Bürsten befestigt sind, und welcher lösbar gelagert ist. Die lösbare Lagerung erfolgt bevorzugterweise an einer Schiene, welche einen im wesentlichen C-förmigen Querschnitt aufweist. Somit kann die Schleifeinrichtung seitlich eingeschoben bzw. entnommen werden, ohne daß weitere Montage- oder Demontagearbeiten nötig wären.

Die Befestigung der Schiene erfolgt bevorzugterweise an der Seitenfläche der Pressenplatte, welche einen ausreichenden Raum zur Lagerung aufweist.

Erfindungsgemäß können mehrere parallel zueinander angeordSchleifeinrichtungen vorgesehen sein. Die Schleifeinrichtungen können schräg oder quer zur Transportrichtung des Transport- und Druckbandes angeordnet sein.

Um Schmutzpartikel, welche von der Schleifeinrichtung entfernt wurden, sowie möglicherweise auftretende Abriebteile der Schleifeinrichtung aufzufangen, ist vorgesehen, daß unterhalb der Schleifeinrichtung eine Auffangwanne angeordnet ist. Diese kann bevorzugterweise ebenfalls lösbar an einer Schiene gelagert sein, welche einen C-förmigen Querschnitt aufweist.

Erfindungsgemäß ist es günstig, wenn das Transport- und Druckband in Form einer Mylar-Transportfolie ausgebildet ist.

Im folgenden wird die Erfindung anhand eines Ausführungsbeispieles in Verbindung mit der Zeichnung beschrieben. Dabei zeigt:

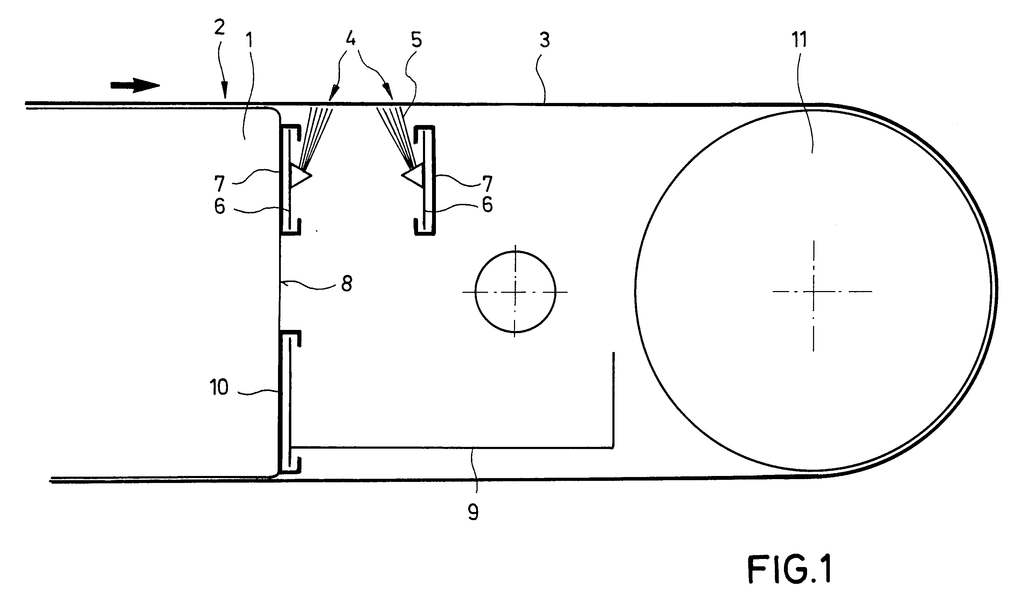

- Fig. 1: eine schematische Teil-Schnittansicht der erfindungsgemäßen Vorrichtung.

Die Fig. 1 zeigt nur einen Teil der erfindungsgemäßen Vorrichtung, nämlich den Auslaufteil eines Transport- und Druckbandes 3 von einer Pressenplatte 1. Mit dem Bezugszeichen 2 ist ein Durchlaufkanal markiert, welcher zwischen der Pressenplatte 1 und der darüberliegenden weiteren Pressenplatte gebildet wird. Bezüglich des Gesamtaufbaues wird auf die DE-OS 39 12 314 Bezug genommen, so daß auf weitere Erläuterungen verzichtet werden kann.

Das Transport- und Druckband 3 wird über eine Walze 11 umgeleitet und an der Unterseite der Pressenplatte 1 zurückgeführt, so daß ein endlos umlaufendes Band gebildet wird.

An einer rückwärtigen Seitenfläche 8 der Pressenplatte 1 ist eine Schiene 7 montiert, welche einen im wesentlichen C-förmigen Querschnitt aufweist. Im inneren Freiraum der Schiene ist ein plattenförmiger Träger 6 lösbar eingeschoben, an welchem zur Bildung einer Schleifeinrichtung 4 metallische Bürsten oder Borsten 5 befestigt sind. Die Borsten 5 gleiten an der Innenfläche des Transport- und Druckbandes 3 und führen somit sowohl zu einer statischen Entladung als auch zur Entfernung von Partikeln, welche an dem Transport- und Druckband 3 haften.

Das Ausführungsbeispiel der Fig. 1 zeigt zwei zueinander parallele Schleifeinrichtungen 4. Unterhalb der Schleifeinrichtungen 4 ist an der Seitenfläche 8 der Pressenplatte 1 eine weitere Schiene 10 befestigt, welche ebenfalls einen C-förmigen Querschnitt aufweist. In diese Schiene 10 ist eine Auffangwanne 9 lösbar eingehängt, welche zum Auffangen von Partikeln dient, die von der Schleifeinrichtung 4 abfallen.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

Es versteht sich, daß, obwohl in Fig. 1 nur die untere Pressenplatte gezeigt ist, auch die zugeordnete obere Pressenplatte mit einer entsprechenden Schleifeinrichtung versehen sein kann.

Zusammenfassend ist folgendes festzustellen:

Die Erfindung bezieht sich auf eine Vorrichtung zum Verpressen von flächigen Werkstücken, insbesondere aus Holz, wie etwa Furnieren. Die Vorrichtung umfaßt eine obere und eine untere beheizbare Pressenplatte (1), um welche jeweils ein Transport- und Druckband (3) umläuft. Zur Ableitung elektrostatischer Aufladungen und zur Reinigung des Transport- und Druckbandes (3) ist vorgesehen, daß am Auslaufbereich des Transport- und Druckbandes (3) von der Pressenplatte (1) zumindest eine elektrisch leitende Schleifeinrichtung (4) angeordnet ist, welche in Kontakt mit dem Transport- und Druckband (3) steht.

## Patentansprüche

1. Vorrichtung zum Verpressen von flächigen Werkstücken, insbesondere aus Holz, wie etwa Furnieren, mit einer oberen und einer unteren beheizbaren Pressenplate (1), welche gegeneinander bewegbar sind, sowie mit einem oberen und einem unteren, jeweils umlaufenden, durch den zwischen den Pressenplatten (1) gebildeten Durchlaufkanal (2) bewegbaren, aus einem Kunststoff-Material bestehenden Transport- und Druckband (3), dadurch gekennzeichnet, daß am Auslaufbereich des Transport- und Druckbandes (3) von der Pressenplatte (1) zwischen dem oberen und dem unteren Trum des Transport- und Druckbandes (3) zumindest eine elektrisch leitende Schleifeinrichtung (4) angeordnet ist, welche in Kontakt mit dem Transport- und Druckband (3) steht und welche metallische Bürsten (5) umfaßt.

2. Vorrichtung nach Anspruch 1, dadurch gekennzeichnet, daß sich die Schleifeinrichtung (4) über die gesamte Breite des Transport- und Druckbandes (3) erstreckt.

3. Vorrichtung nach Anspruch 1 oder 2, dadurch gekennzeichnet, daß die Schleifeinrichtung (4) einen metallischen Träger (6) umfaßt, an welchem die Bürsten (5) befestigt sind und welcher lösbar gelagert ist.

4. Vorrichtung nach Anspruch 3, dadurch gekennzeichnet, daß der Träger (6) im wesentlichen plattenförmig ausgebildet und in einer einen C-förmigen Querschnitt aufweisenden Schiene (7) gelagert ist.

5. Vorrichtung nach Anspruch 4, dadurch gekennzeichnet, daß die Schiene (7) an der Seitenfläche (8) der Pressenplatte (1) befestigt ist.

6. Vorrichtung nach einem der Ansprüche 1 bis 5, dadurch gekennzeichnet, daß parallel zueinander mehrere Schleifeinrichtungen (4) vorgesehen sind.

7. Vorrichtung nach einem der Ansprüche 1 bis 6, dadurch gekennzeichnet, daß die Schleifeinrichtung (4) quer zur Transportrichtung des Transport- und Druckbandes (3) angeordnet ist.

8. Vorrichtung nach einem der Ansprüche 1 bis 7, dadurch gekennzeichnet, daß unterhalb der Schleifeinrichtung (4) eine Auffangwanne (9) angeordnet ist.

9. Vorrichtung nach Anspruch 8, dadurch gekennzeichnet, daß die Auffangwanne (9) lösbar an einer einen C-förmigen Querschnitt aufweisenden Schiene (10) gelagert ist.

10. Vorrichtung nach einem der Ansprüche 1 bis 9, dadurch gekennzeichnet, daß das Transport- und Druckband (3) in Form einer Mylar-Transportfolie ausgebildet ist.

## Claims

1. A device for compressing flat workpieces, in particular of wood, such as veneers, having an upper and a lower heatable press plate (1), which can be moved towards one another, and also having an upper and a lower conveying and compression belt (3), which in each case rotate, can move though the through-channel (2) formed between the press plates (1) and are made of a plastics material,
characterised in that at least one electrically conductive grinding device (4), which is in contact with the conveying and compression belt (3) and which comprises metallic brushes (5), is disposed at the delivery region of the conveying and compression belt (3) of the press plate (1) between the upper and the lower section of the conveying and compression belt (3).

2. A device according to Claim 1,
**characterised in that** the grinding device (4) extends over the entire width of the conveying and compression belt (3).

3. A device according to Claim 1 or 2,
**characterised in that** the grinding device (4) comprises a metallic support (6), to which the brushes (5) are attached and which is detachably mounted.

4. A device according to Claim 3,
**characterised in that** the support (6) has a substantially plate-shaped construction and is mounted in a rail having a C-shaped cross section.

5. A device according to Claim 4,
**characterised in that** the rail (7) is attached to the side face (8) of the press plate (1).

6. A device according to one of Claims 1 to 5,
**characterised in that** several grinding devices (4) are provided parallel to one another.

7. A device according to one of Claims 1 to 6,
**characterised in that** the grinding device (4) is disposed transversally to the direction of transport of the conveying and compression belt (3).

8. A device according to one of Claims 1 to 7,
**characterised in that** a collecting vat (9) is disposed beneath the grinding device (4).

9. A device according to Claim 8,
**characterised in that** the collecting vat (9) is detachably mounted on a rail (10) having a C-shaped cross section.

10. A device according to one of Claims 1 to 9,
**characterised in that** the conveying and compression belt (3) is constructed in the form of a mylar conveying film.

## Revendications

1. Dispositif de pressage de pièces en nappe, notamment en bois, par exemple de placage, comportant un plateau de pressage supérieur et un plateau de pressage inférieur (1) propres à être chauffés, qui sont déplaçables l'un par rapport à l'autre, ainsi qu'une bande de transport et de pressage supérieure et une bande de transport et de pressage inférieure (3), faites en une matière plastique, chacune tournant et se déplaçant dans le passage (2) formé entre les plateaux de pressage (1), caractérisé en ce qu'il est prévu, dans la zone de sortie de la bande de transport et de pressage (3), à partir du plateau de pressage (1), entre le brin supérieur et le brin inférieur de la bande de transport et de pressage (3), au moins un dispositif d'abrasion (4) électriquement conducteur, qui est en contact avec la bande de transport et de pressage (3) et qui comprend des brosses métalliques (5).

2. Dispositif selon la revendication 1, caractérisé en ce que le dispositif d'abrasion (4) s'étend sur toute la largeur de la bande de transport et de pressage (3).

3. Dispositif selon la revendication 1 ou 2, caractérisé en ce que le dispositif d'abrasion (4) comprend un support métallique (6) sur lequel les brosses (5) sont fixées et qui est monté de façon amovible.

4. Dispositif selon la revendication 3, caractérisé en ce que le support (6) est réalisé sensiblement en forme de plaque et en ce qu'il est monté dans un rail (7) à section transversale en forme de C.

5. Dispositif selon la revendication 4, caractérisé en ce que le rail (7) est fixé contre la surface latérale (8) du plateau de pressage (1).

6. Dispositif selon l'une des revendications 1 à 5, caractérisé en ce qu'il est prévu plusieurs dispositifs d'abrasion (4), disposés parallèlement les uns par rapport aux autres.

7. Dispositif selon l'une des revendications 1 à 6, caractérisé en ce que le dispositif d'abrasion (4) est disposé transversalement au sens de déplacement de la bande de transport et de pressage (3).

8. Dispositif selon l'une des revendications 1 à 7, caractérisé en ce qu'un bac récepteur (9) est placé au-dessous du dispositif d'abrasion (4).

9. Dispositif selon la revendication 8, caractérisé en ce que le bac récepteur (9) est monté amovible contre un rail (10) présentant une section transversale en forme de C.

10. Dispositif selon l'une des revendications 1 à 9, caractérisé en ce que la bande de transport et de pressage (3) est réalisée sous la forme d'une feuille de transport en mylar.
